(19) **Europäisches Patentamt**
**European Patent Office**
**Office européen des brevets**

(11) **EP 1 325 354 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(21) Anmeldenummer: **01986768.8**

(22) Anmeldetag: **04.10.2001**

(51) Int Cl.:
***G01T 1/167*** *(2006.01)*

(86) Internationale Anmeldenummer:
**PCT/EP2001/011494**

(87) Internationale Veröffentlichungsnummer:
**WO 2002/031534 (18.04.2002 Gazette 2002/16)**

(54) **VERFAHREN ZUR VERKÜRZUNG DER STATISTISCHEN MESSZEITEN IM BEREICH DER RADIOAKTIVITÄTSMESSUNG**

METHOD FOR SHORTENING THE STATISTICAL MEASURING TIMES IN THE DOMAIN OF RADIOACTIVITY MEASUREMENTS

PROCEDE PERMETTANT DE REDUIRE LES TEMPS STATISTIQUES DE MESURE DANS LE CADRE DE LA MESURE DE RADIOACTIVITE

(84) Benannte Vertragsstaaten:
**BE DE FR GB SE**

(30) Priorität: **09.10.2000 DE 10051330**

(43) Veröffentlichungstag der Anmeldung:
**09.07.2003 Patentblatt 2003/28**

(73) Patentinhaber: **RADOS Technology GmbH**
**22761 Hamburg (DE)**

(72) Erfinder:
• **KREBS, Bodo**
**21258 Heidenau (DE)**

• **KÖLLN, Ingo**
**22609 Hamburg (DE)**

(74) Vertreter: **Hauck Patent- und Rechtsanwälte**
**Neuer Wall 50**
**20354 Hamburg (DE)**

(56) Entgegenhaltungen:
**DE-A- 4 240 535        US-A- 3 670 164**
**US-A- 5 570 406**

EP 1 325 354 B1

**Beschreibung**

Die Erfindung betrifft ein Verfahren zur Feststellung einer Überschreitung eines Grenzwerts bei einer Radioaktivitätsmessung.

Bei der Messung von radioaktiven Kontaminationen werden die Messwerte mit einem Grenzwert verglichen, der sich aus behördlichen bzw. gesetzlichen Vorgaben ergibt. Aufgrund der Natur der radioaktiven Strahlung unterliegen die Messwerte zeitlichen Schwankungen. Es werden daher zur Messung einer Kontamination statistische Sicherheiten benutzt, die sich auf die sogenannte Nullmessung und die Ereignismessung beziehen. Dabei ist es bekannt, die Messdauer abhängig von der erforderlichen statistischen Sicherheit, dem resultierenden Grenzwert und dem Wert der Nullmessung zu bestimmen. Die Messdauer zur Erfüllung der statistischen Sicherheit liegt also bereits vor Beginn der eigentlichen Messung fest und errechnet sich aus den oben genannten Parametern. Für die vorgegebene Messdauer wird der Messwert ermittelt und mit dem Grenzwert für den Messwert verglichen. Liegt der Messwert oberhalb des Grenzwertes, so wird eine Grenzwertüberschreitung festgestellt. Nachteilig an dem bekannten Verfahren ist, dass sich vergleichsweise lange Messdauern ergeben, auch wenn keine Kontamination (Nettomessrate) vorliegt.

Aus US 5,570,406 ist ein Verfahren bekannt, um zu überprüfen, ob eine Schwefelkonzentration von einem Gewichtsprozent oder weniger mit einer ausreichend hohen Sicherheit vorliegt. Zur Prüfung wird dabei ein Zwischenmeßwert für die Konzentration und ein Zwischenmeßwert für dessen Fehler bestimmt. Liegt der zu prüfende Wert für die Schwefelkonzentration außerhalb eines Intervalls, das durch den Zwischenmeßwert und dessen Fehler definiert ist, so wird die Messung abgebrochen.

Aus DE 42 40 535 A1 ist ein Verfahren zum schnellen Nachweis von Radionukliden in bewegten Supportcontainern bekannt. Zur Messung wird auf die statistischen Größen der Schiefe abgestellt und diese mit vorbestimmten Größen für die Schiefe verglichen.

Aus DE 42 40 535 ist ein Verfahren zum schnellen Nachweis einer relativ zum Empfänger bewegten Strahlungsquelle mit einer Gammalinie bekannt.

Aus US 3,670,164 ist ein Plutoniumdetektor für Personen bekannt. Bei dem Plutoniumdetektor wird durch eine Anzahl von Gammadetektoren fortlaufend die Hintergrundstrahlung gemessen. Der gemessene Wert wird beim Eintritt einer Person in die Detektionszone als aktueller Wert für die Hintergrundstrahlung verwendet und bei der Messung berücksichtigt.

Der Erfindung liegt die Aufgabe zu Grunde, ein Verfahren zur Feststellung einer Grenzwertüberschreitung zu schaffen, das schnell und zuverlässig das Vorliegen einer Grenzwertüberschreitung anzeigt.

Erfindungsgemäß wird die Aufgabe durch ein Verfahren mit den Merkmalen aus Anspruch 1 gelöst.

Bei dem erfindungsgemäßen Verfahren wird die Überschreitung eines Grenzwertes bei einer Radioaktivitätsmessung bestimmt. In einem ersten Schritt wird eine maximale Messdauer für ein verwendetes Kontaminationsmessgerät berechnet. Bevorzugt wird die Messdauer für das Kontaminationsmessgerät mit Hilfe der in der DIN 25482/1 definierten Nachweisgrenze berechnet. Erfindungsgemäß werden nun mit dem Messgerät mehrere Einzelmessungen mit jeweils einer kürzeren Messdauer ausgeführt. Nach jeder Einzelmessung wird anhand der bisher gemessenen Messwerte eine Wahrscheinlichkeit berechnet dafür, dass in der noch verbleibenden Messdauer der Mittelwert sämtlicher Messwerte den Grenzwert übersteigt. Diese Wahrscheinlichkeit kann unter Verwendung der einschlägigen Mathematik der Wahrscheinlichkeitsrechnung ohne grosse Probleme berechnet werden. In dem Fall, in dem die berechnete Wahrscheinlichkeit kleiner oder gleich einer vorbestimmten Sicherheit ist, wird ein Signal erzeugt, das die Messung beendet. Die vorbestimmte Sicherheit wird durch einen Zahlenwert gebildet und dient als ein Vergleichswert für die berechnete Wahrscheinlichkeit. In diesem Falle wurde also durch eine oder mehrere Einzelmessungen mit kürzerer Messdauer als die vorgeschriebene Gesamtmessdauer eine Aussage mit einer ausreichenden Zuverlässigkeit gewonnen. Ist die Wahrscheinlichkeit dafür, dass in den noch verbleibenden Einzelmessungen der Mittelwert sämtlicher Messwerte den Grenzwert übersteigt größer als die vorbestimmte Sicherheit, wird erneut eine Einzelmessung durchgeführt und unter Berücksichtigung des neuen Messwerts die Wahrscheinlichkeit erneut bestimmt. Dies Verfahren wird solange wiederholt, bis entweder ein Signal erzeugt wird, wonach keine Sicherheit vorliegt, oder bis die Summe der Messdauer der Einzelmessungen die Gesamtmessdauer erreicht oder überschreitet. In letzterem Fall ist die Wahrscheinlichkeit für eine Grenzwertüberschreitung größer als die vorbestimmte Sicherheit, so dass abhängig von der geforderten statistischen Sicherheit für die Messung dann eine Grenzwertüberschreitung festgestellt oder ausgeschlossen wird. Vorteilhaft an dem erfindungsgemäßen Verfahren ist, dass sich bei vielen Messungen von Gegenständen oder Personen die Messdauer deutlich verkürzen läßt, wenn die Strahlung weit unterhalb des Grenzwerts liegt. Dies hat zur Folge, dass beispielsweise Schleusen in Atomkraftwerken, in denen Messungen durchgeführt werden, wesentlich schneller arbeiten und während einer Schicht mehr Personen und Güter durch diese hindurch geschleust werden können. Es ist wichtig zu bemerken, dass das erfindungsgemäße Verfahren die Aussage, dass eine Überschreitung eines Grenzwertes bei einer Radioaktivitätsmessung vorliegt bzw. diese Überschreitung nicht vorliegt, mit der selben statistischen Sicherheit wie herkömmliche Verfahren treffen kann. Es wird bei dem erfindungsgemäßen Verfahren die Messdauer abhängig von den bisher durchgeführten Einzelmessungen verkürzt, wenn aufgrund der Einzelmessung mit der geforderten statistischen Sicherheit ausgeschlossen werden kann, dass noch eine Grenzwertüberschreitung auftritt. Das erfindungsgemäße Verfahren wird von der Anmelderin als $P^2$-Verfahren oder als "Probability Propagation" bezeichnet. Das erfindungsgemäße Verfahren liefert eine Ersparnis der Messdauer, wenn nach ersten Einzelmessungen bereits mit hinreichender Sicherheit statistisch die Aussage getroffen werden kann, dass eine Grenzwertüberschreitung unwahrscheinlich ist.

Für die Verteilung der Messwerte wird insbesondere bei Messgeräten für β- und/oder γ-Strahlung eine Gauss-Verteilung verwendet. Bei vergleichsweise geringen Bruttozählraten, wie sie beispielsweise bei der Messung von α-Strahlung auftreten, wird die Poisson- oder Binominal-Verteilung für die Messwerte verwendet.

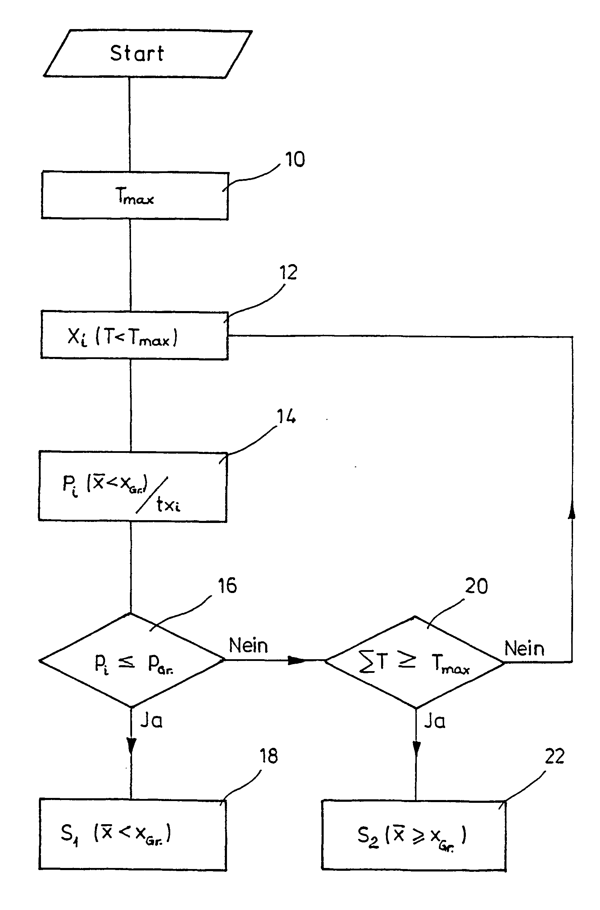

Das erfindungsgemäße Verfahren wird anhand der einzigen Figur näher erläutert.

Wie bereits ausgeführt wird die Messdauer für ein Kontaminationsmessgerät in Deutschland aus der in DIN 25482/1 definierten Nachweisgrenze berechnet. Die Nachweisgrenze ist definiert als

$$\rho_n = \left(\kappa_\alpha + \kappa_\beta\right) \cdot \sqrt{\rho_0 \left(\frac{1}{t_0} + \frac{1}{t_b}\right)} + \left(\kappa_\alpha + \kappa_\beta\right)^2 \cdot \left[\frac{1}{t_0} + \frac{1}{t_b}\right]$$

wobei

$\kappa_\alpha, \kappa_\beta$:     Quantile der Standardnormalverteilung

$\rho_o$:     Erwartungswert der Nulleffekt-Zählrate

$\rho_n$:     Nachweisgrenze für den Erwartungswert der Nettozählrate

$t_0$:     Messdauer der Nulleffektmessung

$t_b$:     Messdauer der Bruttoeffektmessung.

Ein Auflösen der Gleichung für die Nachweisgrenze ergibt die Bruttomessdauer für das Messgerät. Hierbei wird noch in bekannter Weise der Detektorwirkungsgrad berücksichtigt. Bei vorgegebener Nachweisgrenze liegt also die Messdauer fest. Die Messdauer wird in N Messzyklen unterteilt, wobei jeder Messzyklus für die Dauer T durchgeführt wird.

Bei dem erfindungsgemäßen Verfahren wird nach jeder Messung die Wahrscheinlichkeit ausgerechnet, die angibt, ob bei Berücksichtigung der bisherigen Messwerte eine Grenzwertüberschreitung in der verbleibenden Messdauer noch erreicht wird.

Dies läßt sich an einem einfachen Beispiel verdeutlichen: Angenommen, es werden zehn Einzelmessungen durchgeführt und der zu prüfende Grenzwert betrage zwölf. Nach dem erfindungsgemäßen Verfahren wird am Ende jeder Einzelmessung berechnet wie gross die Wahrscheinlichkeit ist, dass in den verbleibenden Einzelmessungen noch eine Grenzwertüberschreitung zu erhalten ist.

| 1. Messung | 2. Messung | 3. Messung | 4. Messung | 5. Messung | 6. Messung | 7. Messung | 8. Messung | 9. Messung | 10. Messung | Mittel wert |
|---|---|---|---|---|---|---|---|---|---|---|
| 2 | 3 | 1 | 4 | 2 | 3 | 2 | 3 | 1 | 3 | 2,4 |

Nach der ersten Einzelmessung wird also beispielsweise gefragt, ob die Wahrscheinlichkeit größer als 0,95 ist, dass im Mittel noch eine Grenzwertüberschreitung erhalten wird, wenn der erste Messwert 2 ist. Nach der zweiten Einzelmessung wird gefragt, ob die Wahrscheinlichkeit größer als 0,95 ist, dass im Mittel noch eine Grenzwertüberschreitung auftritt, wenn der erste Messwert 2 und der zweite Messwert 3 beträgt. Dieses Verfahren wird fortgesetzt, bis aufgrund der angefallenen Messwerte die geschätzte Wahrscheinlichkeit für eine ausbleibende Grenzwertüberschreitung mit ausreichender Sicherheit gross genug ist.

Dass dieses Verfahren eine Zeitersparung liefert wird noch deutlicher, wenn der Nullwert gemessen wird. Wird neunmal Null gemessen, ist es ohne weiteres einsichtig, dass der zehnte Messwert sehr unwahrscheinlich größer als 120 ist und somit zu einer Grenzwertüberschreitung führt. Er wird nachweislich eine geforderte Wahrscheinlichkeit von 0,95 unterschreiten. Hierzu können beispielsweise bei bekannter Verteilung der Messwerte aus den ersten neun Messwerten die Parameter der Verteilung geschätzt werden und dann die Wahrscheinlichkeit für einen Messwert größer als 120 bestimmt werden.

Der Ablauf des Verfahrens ist in der einzigen Figur als Flussdiagramm dargestellt. In dem Verfahrensschritt 10 wird die Größe $T_{Max}$ berechnet. Diese Größe kann beispielsweise die zuvor beschriebene Messdauer $t_b$ sein. In einem nachfolgenden Schritt 12 wird eine Messung für die Dauer T mit $T < T_{Max}$ durchgeführt. Für den Messwert und bereits davor gemessene Messwerte wird die Wahrscheinlichkeit $p_i$ berechnet dafür, dass der Mittelwert $\bar{x}$ aller in der Messzeit $T_{max}$ möglichen Messungen kleiner als ein Grenzwert $x_{Gr}$ ist, wobei die Berechnungsgrundlage die bisherigen Messwerte sind. Zur Bestimmung dieser Wahrscheinlichkeit wird ausgenutzt, dass für die Messwerte bei grossen Zählraten eine Normalverteilung vorliegt und bei niedrigen Zählraten eine Poisson- oder Binominal-Verteilung vorliegt.

Die so bestimmte Wahrscheinlichkeit $p_i$ wird mit einer eingestellten statistischen Sicherheit zur Grenzüberschreitung $P_{Gr}$ in Verfahrensschritt 16 verglichen. Ist also die Restwahrscheinlichkeit $p_i$ zur Grenzüberschreitung kleiner als die eingestellte statistische Sicherheit zur Grenzüberschreitung $P_{Gr}$, so wird in Verfahrensschritt 18 ein Signal $S_1$ generiert, das die Gesamtmessung abbricht. Ist diese Aussage nicht möglich, so wird nachfolgend die Gesamtdauer der Einzelmessung mit der Maximaldauer in Verfahrensschritt 20 verglichen. Ist bereits hinreichend lange gemessen worden, wird ein Signal $S_2$ generiert, wonach die Wahrscheinlichkeit $p_i$ größer als $P_{Gr}$ ist und eine Grenzwertüberschreitung möglicherweise vorliegt. Ist die bisher aufgetretene Messdauer in Verfahrensschritt 20 nicht größer als die Gesamtmessdauer, so kehrt das Verfahren zu dem Verfahrensschritt 12 zurück und wiederholt eine Messung für die Messdauer T, die kleiner als $T_{Max}$ ist.

Selbstverständlich ist es möglich, auch die Messdauer der einzelnen Messvorgänge variabel zu gestalten und sogar von bisherigen Messergebnissen abhängig zu wählen.

Das Verfahren wurde durch Simulationen getestet, bei denen anhand von realistisch aufgezeichneten Messwerten eine Effektivitätssteigerung von ungefähr 30 % bei selber Sicherheit erzielt werden konnte. Das Verfahren wurde mit den Daten eines Personenmonitors vom Typ RTM860TS der Anmelderin als Vormonitor eines deutschen Kernkraftwerks getestet. In 36 Tagen wurden dabei ungefähr 27.000 Messungen durchgeführt, was 13.500 Begehungen entspricht. Die durchschnittliche Messzeit nach DIN betrug 9,9 Sekunden pro Körperseite. Diese Messzeit konnte durch das erfindungsgemäße Verfahren um 27,9 % verkürzt werden, was bei durchschnittlich 375 Begehungen pro Tag zu einer Einsparung von 34 Minuten pro Tag und Gerät führt.

**Patentansprüche**

1. Verfahren zur Feststellung einer Überschreitung eines vorbestimmten Grenzwertes bei einer Radioaktivitätsmessung mit folgenden Verfahrensschritten:

   - es wird eine Gesamtmessdauer für ein Kontaminationsmessgerät berechnet,
   - die Gesamtmessdauer wird in mehrere Messzyklen unterteilt
   - mit dem Messgerät werden mehrere Einzelmessungen mit einer dem jeweiligen Messzyklen entsprechenden Messdauer, welche kürzer als die Gesamtmessdauer ist, ausgeführt,
   - nach jeder Einzelmessung wird anhand der bisher in den Einzelmessungen gemessenen Messwerte eine Wahrscheinlichkeit berechnet dafür, dass mit einer oder mehreren Einzelmessungen über die verbleibenden Messzyklen der Mittelwert aus sämtlichen Einzelmessungen den Grenzwert übersteigt, wobei zur Bestimmung der Wahrscheinlichkeit für β- und/oder γ-Strahlung eine Gauss-Verteilung und für α-Strahlung eine Poisson- oder Binominal-Verteilung verwendet wird,
   - in dem Fall, in dem die berechnete Wahrscheinlichkeit kleiner einer vorbestimmten Sicherheit ist, den Grenzwert in der verbleibenden Messdauer noch zu überschreiten, wird ein Signal erzeugt wonach eine Überschreitung des Grenzwerts nicht vorliegt und das Verfahren beendet, ansonsten werden weitere Einzelmessungen durchgeführt entweder bis die Gesamtmessdauer erreicht oder überstiegen wird oder bis bei einer der Einzelmessungen die berechnete Wahrscheinlichkeit kleiner oder gleich der vorbestimmten Sicherheit ist und das Verfahren beendet wird.

2. Verfahren nach Anspruch 1, **dadurch gekennzeichnet, dass** abhängig von der Nachweisgrenze insbesondere nach DIN 25482/1 die Gesamtmessdauer bestimmt wird, wobei die Nachweisgrenze als

$$\rho_n = \left(\kappa_\alpha + \kappa_\beta\right) \cdot \sqrt{\rho_0\left(\frac{1}{t_0} + \frac{1}{t_b}\right)} + \left(\kappa_\alpha + \kappa_\beta\right)^2 \cdot \left[\frac{1}{t_0} + \frac{1}{t_b}\right]$$

mit $\kappa_\alpha$, $\kappa_\beta$ Quantile der Standardnormalverteilung, $\rho_o$ Erwartungswert der Nulleffekt-Zählrate, $\rho_n$ Nachweisgrenze für den Erwartungswert der Nettozählrate, $t_0$ Messdauer der Nulleffektmessung und $t_b$ Messdauer der Bruttoeffektmessung definiert ist.

## Claims

1. Method for the detection of an exceeding of a predetermined limiting value in a radioactivity measurement, **characterised by** the following procedure steps:

    - a total duration of measurement for a contamination measuring device is calculated,
    - the total duration of measurement is subdevided into several measurement cycles,
    - several single measurements are performed with the measuring device, with duration of measurement corresponding to the respective measurement cycle and being shorter than the total duration of measurement,
    - after each single measurement, a probability is calculated on the basis of the previously measured measurement values, that with one or several single measurement(s) during the remaining measurement cycles the mean value of all the single measurements exceeds the limiting value, wherein a gaussian distribution is used for determining the probability for $\beta$- and/or $\gamma$-radiation and a Poisson- or binominal distribution is used for $\alpha$-radiation,
    - in the case that the calculated probability is smaller than a predetermined certainty to exceed the limiting value in the remaining duration of measurement, a signal is generated that an exceeding of the limiting value did not occur and the procedure is ended, otherwise further single measurements are performed until either the total duration of measurement is reached or exceeded or until in one of the single measurements the calculated probability is smaller than or equal to the predetermined certainty, and the procedure is ended.

2. Method according to one of claims 1 to 4, **characterised in that** the total measurement duration is determined depending on the detection limit, particularly according to DIN 25482/1, the detection limit being defined as

$$\rho_n = \left(\kappa_\alpha + \kappa_\beta\right) \cdot \sqrt{\rho_0\left(\frac{1}{t_0} + \frac{1}{t_b}\right)} + \left(\kappa_\alpha + \kappa_\beta\right)^2 \cdot \left[\frac{1}{t_0} + \frac{1}{t_b}\right]$$

with $\kappa_\alpha$, $\kappa_\beta$ quantiles of the standard normal distribution, $\rho_o$ expected value of the background counting rate, $\rho_n$ detection limit for the expected value of the net counting rate, $t_0$ duration of measurement of the background measurement and $t_b$ duration of measurement of the gross effect measurement.

## Revendications

1. Procédé pour la détermination d'un dépassement d'une valeur limite prédéfinie dans le cadre d'une mesure de radioactivité comprenant les étapes de procédé suivantes :

    - une durée de mesure totale est calculée pour un appareil de mesure de la contamination,
    - la durée de mesure totale est subdivisée en plusieurs cycles de mesure
    - avec l'appareil de mesure, plusieurs mesures individuelles sont effectuées avec une durée de mesure correspondant au cycle respectif de mesure plus courte que la durée de mesure totale,

- après chaque mesure individuelle, au moyen des valeurs de mesure obtenues dans les mesures individuelles jusqu'ici, une probabilité est calculée que, avec une ou plusieurs mesures individuelles pendant les cycles de mesure restants, la valeur moyenne de toutes les mesures individuelles dépasse la valeur limite, une distribution gaussienne étant utilisée pour la détermination de la probabilité pour le rayonnement $\beta$ et/ou $\gamma$ et une distribution de Poisson ou une distribution binominale pour le rayonnement $\alpha$,

- dans le cas où la probabilité calculée que la valeur limite dans la durée de mesure encore restante sera dépassée est inférieure à une certitude prédéfinie, un signal est généré selon lequel il n'y a pas de dépassement de la valeur limite et le procédé est arrêté, sinon, d'autres mesures individuelles sont effectuées soit jusqu'à ce que la durée de mesure totale soit atteinte ou franchie, soit jusqu'à ce que lors d'une mesure individuelle la probabilité calculée devienne inférieure ou égale à la certitude prédéfinie et le procédé soit arrêté.

2. Procédé selon la revendication 1, **caractérisé en ce que** la durée totale de mesure est déterminée en fonction du seuil de détection en particulier selon DIN 25482/1, le seuil de détection étant défini en tant que

$$\rho_n = \left(\kappa_\alpha + \kappa_\beta\right) \cdot \sqrt{\rho_0\left(\frac{1}{t_0} + \frac{1}{t_b}\right) + \left(\kappa_\alpha + \kappa_\beta\right)^2 \cdot \left[\frac{1}{t_0} + \frac{1}{t_b}\right]}$$

où $\kappa_\alpha$, $\kappa_\beta$ sont des quantiles de la distribution normale centrée réduite, $\rho_0$ est l'espérance mathématique du taux de comptage du bruit de fond, $\rho_n$ est le seuil de détection pour l'espérance mathématique du taux de comptage net, $t_0$ est la durée de mesure de la mesure de bruit de fond $et$ $t_b$ est la durée de mesure de la mesure de la valeur brute.

```
                    ┌─────────────────┐
                   ╱      Start      ╱
                  └─────────────────┘
                           │
                           │
                    ┌──────────────┐  10
                    │    T_max     │
                    └──────────────┘
                           │
                           │
                    ┌──────────────┐  12
                    │  X_i (T<T_max)│──────────────────────────┐
                    └──────────────┘                          │
                           │                                  │
                           │                                  │
                    ┌──────────────┐  14                      │
                    │  P_i (x̄<x_Gr.)│                          │
                    │      ──────── │                          │
                    │        t×i    │                          │
                    └──────────────┘                          │
                           │                                  │
                    16     │                   20             │
                      ◇────┴────◇  Nein      ◇─────────◇  Nein │
                     ╱ P_i ≤ P_Gr. ╲─────────▶╱ ∑T ≥ T_max ╲───┘
                      ◇─────────◇            ◇─────────◇
                           │ Ja                   │ Ja
                           │                      │
                    ┌──────────────┐  18   ┌──────────────┐  22
                    │  S_1 (x̄<x_Gr.)│       │ S_2 (x̄≥x_Gr.) │
                    └──────────────┘       └──────────────┘
```

Start

$T_{max}$ — 10

$X_i \ (T < T_{max})$ — 12

$P_i \ (\overline{x} < x_{Gr.}) / t x_i$ — 14

16: $P_i \leq P_{Gr.}$ — Nein / Ja

20: $\sum T \geq T_{max}$ — Nein / Ja

18: $S_1 \ (\overline{x} < x_{Gr.})$

22: $S_2 \ (\overline{x} \geq x_{Gr.})$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5570406 A
- DE 4240535 A1
- DE 4240535
- US 3670164 A